**Europäisches Patentamt**

**European Patent Office**

**Office européen des brevets**

(11) Veröffentlichungsnummer: **0 183 195**
**A2**

# (12) EUROPÄISCHE PATENTANMELDUNG

(21) Anmeldenummer: 85114799.1

(22) Anmeldetag: 21.11.85

(51) Int. Cl.⁴: **C08L 77/00** , C08L 71/04 , C08K 5/52 , C08K 5/53 , C08K 3/00

(30) Priorität: 27.11.84 DE 3443154

(43) Veröffentlichungstag der Anmeldung:
04.06.86 Patentblatt 86/23

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Seiler, Erhard, Dr.
Erpolzheimer Strasse 1
D-6700 Ludwigshafen(DE)
Erfinder: Hambrecht, Juergen, Dr.
Werderstrasse 30
D-6900 Heidelberg(DE)
Erfinder: Taubitz, Christof, Dr.
In der Dreispitz 15
D-6706 Wachenheim(DE)

(54) Selbstverlöschende thermoplastische Polyamid-Formmassen.

(57) Selbstverlöschende thermoplastische Polyamid-Formmassen, enthaltend Polyamide, Polyphenylenether und Zusatzstoffe, gekennzeichnet durch einen Gehalt an

(A) 30 bis 40 Gew.% mindestens eines thermoplastischen Polyamids

(B) 20 bis 50 Gew.% mindestens eines thermoplastischen Polyphenylenethers

(C) 5 bis 15 Gew.% mindestens eines Alkali- oder Erdalkaliphosphats, eines hochsiedenden Phosphorsäureesters, Phosphorigsäureesters, Phosphonigsäureesters, Phosphinsäureesters oder organischen Phosphinoxid

(D) 5 bis 30 Gew.% gerüstbildenden Füllstoffen

(E) 0 bis 30 Gew.% Glasfasern

(F) 0 bis 20 Gew.% mindestens eines kautschuk-elastischen Polymere

(G) 0 bis 20 Gew.% mindestens eines Styrolpolymerisats, wobei sich die Gewichtsprozente der Komponenten A bis G auf 100 Gew.% ergänzen sowie

(H) gegebenenfalls Zusatzstoffe in wirksamen Mengen.

Selbstverlöschende thermoplastische Polyamid-Formmassen

Thermoplastische Polyamide haben eine breite Anwendung bei der Herstellung von Formteilen durch Spritzguß und Extrusion gefunden. Um die Lösungsmittelbeständigkeit von Polyphenylenoxiden zu verbessern, wurden auch schon Mischungen aus Polyamiden und Polyphenylenoxiden hergestellt, wie aus der GB-PA 2054623 bekannt ist. In zunehmenden Maße wird jedoch gefordert, daß thermoplastische Formmassen selbstverlöschend ausgerüstet sind. Polyamidformmassen wurden deshalb bereits mit rotem Phosphorausgerüstet. Solche Formmassen haben jedoch den Nachteil, daß sie Phosphin entwickeln. Es wurden auch schon halogenierte Phosphonsäureester als Flammschutzmittel für Polyamide empfohlen. Halogenierte Verbindungen haben jedoch den Nachteil, daß sie im Brandfalle toxische Gase entwickeln. Zudem neigen halogenierte Flammschutzmittel wie halogeniertes Biphenyl und Diphenylether, zum Ausschwitzen. Außerdem werden durch Flammschutzmittel häufig die mechanischen Eigenschaften der Formmassen beeinträchtigt.

Es war deshalb die technische Aufgabe gestellt, selbstverlöschende, thermoplastische Polyamid-Formmassen zur Verfügung zu stellen, die eine verringerte Wasseraufnahme aufweisen, keine toxischen Additive enthalten und bei denen die verwendeten Additive nicht ausblühen oder ausschwitzen, keine toxischen Rauchgase entwickeln und keine Korrosion verursachen.

Diese Aufgabe wird gelöst durch selbstverlöschende, thermoplastische Polyamid-Formmassen, enthaltend Polyamide, Polyphenylenether und Zusatzstoffe, gekennzeichnet durch einen Gehalt an

A 30 bis 50 Gew.% mindestens eines thermoplastischen Polyamids

B 20 bis 50 Gew.% mindestens eines thermoplastischen Polyphenylenethers

C 5 bis 15 Gew.% mindestens eines Alkali- oder Erdalkaliphosphats eines hochsiedenden Phosphorsäureesters, Phosphorigsäureesters, Phosphinsäureesters, Phosphonigsäureesters oder organischen Phosphinoxids

D 5 bis 30 Gew.% gerüstbildende Füllstoffe

E 0 bis 30 Gew.% Glasfasern

F 0 bis 20 Gew.% mindestens eines Kautschuk-elastischen Polymerisats

G 0 bis 20 Gew.% mindestens eines Styrolpolymerisats, wobei sich die Gewichtsprozente der Komponenten A bis G auf 100 Gew.% ergänzen und

H gegebenenfalls Zusatzstoffe in wirksamen Mengen.

Die neuen Formmassen haben den Vorteil, daß keine toxischen Additive, die toxische Rauchgase entwickeln, mitverwendet werden, die daraus hergestellten Formteile keine Korrosion verursachen und zudem eine verringerte Wasseraufnahme zeigen. Ferner haben die neuen Formmassen den Vorteil, daß keine Ausblüh- oder Ausschwitzerscheinungen feststellbar sind.

Die erfindungsgemäßen Formmassen enthalten als Komponente A 30 bis 50 Gew.%, insbesondere 95 bis 45 Gew.% mindestens eines thermoplastischen Polyamids. Geeignet sind lineare Polyamide z.B. mit einer relativen Viskosität von 2,2 bis 4,5, gemessen als 1 gew.%ige Lösung in 96 gew.%iger Schwefelsäure bei 23°C. Bevorzugt seien genannt Polyamide, die sich von Lactamen mit 7 bis 13 Ringgliedern ableiten, wie Polycaprolactam, Polycaprylactam oder Polylaurinlactam, sowie Polyamide, die durch Umsetzung von Dicarbonsäuren mit Diaminen erhalten werden. Geeignete Dicarbonsäuren, die auch in beliebigen Kombinationen einsetzbar sind, sind beispielsweise Alkandicarbonsäuren mit 6 bis 12 Kohlenstoffatomen, insbesondere 6 bis 10 Kohlenstoffatomen, Terephthalsäure und Isophthalsäure. Geeignete Diamine, die auch in beliebigen Kombinationen einsetzbar sind, sind beispielsweise Alkandiamine mit 6 bis 12 Kohlenstoffatomen, insbesondere 6 bis 8 Kohlenstoffatomen, ferner m-Xylylendiamin, Bis(4-amino-phenyl)methan, Bis(4-aminocyclohexyl)methan oder Bis(4-aminophenyl)-propan-2.2. Es ist auch möglich, Mischungen der genannten Polyamide zu verwenden. Besondere technische Bedeutung haben Polyamid-6, Polyamid-66 sowie Polyamide die aus Hexamethylendiamin und Isophthalsäure sowie Terephthalsäure aufgebaut sind, erlangt.

Als Komponente B enthalten die erfindungsgemäßen Formmassen 20 bis 50 Gew.%, insbesondere 24 bis 40 Gew.% mindestens eines thermoplastischen Polyphenylenethers. Bei den erfindungsgemäß verwandten Polyphenylenethern handelt es sich um Verbindungen auf der Basis von in ortho-Position zum Ethersauerstoff disubstituierten Polyphenylenoxiden, wobei der Ethersauerstoff der einen Einheit an dem Benzolkern der benachbarten Einheit gebunden ist. Vorteilhaft sind mindestens 50 Einheiten, insbesondere 55 bis 100 Einheiten miteinander verknüpft. Polyphenylenether können in ortho-Stellung zum Sauerstoffatom Halogenatome wie Chlor- oder Brom, Alkylreste mit bis zu 4 Kohlenstoffatomen, die kein alpha-ständiges tertiäres Wasserstoffatom besitzen, Halogenalkylreste mit bis zu 4 Kohlenstoffatomen wie Chlormethylreste oder 2-Chlorethylreste, gegebenenfalls durch Alkylreste mit bis zu 4 Kohlenstoffatomen oder durch Halogenatome substituierte Phenylreste oder Alkoxyreste mit bis zu 6 Kohlenstoffatomen als Substituenten haben. Geeignete Polyphenylenether sind beispielsweise Poly(2,6-dichlor-1,4-phenylen)ether, Poly(2,6-diphenyl-1,4-phenylen)ether, Poly(2,6-dimethoxy-1,4-phenylen)ether, Poly(2,6-dimethyl-1,4-phenylen)ether oder Poly(2,6-dibrom-1,4-phenylen)ether. Geeignete Polyphenylenether haben vorteilhaft eine Grenzviskosität von 0,4 bis 0,7 dl/g (gemessen als 0,5 gew.%ige Lösung in Chloroform bei 30°C). Besondere technische Bedeutung hat Poly(2,6-dimethyl-1,4-phenylen)ether erlangt. Die erfindungsgemäß verwendeten Polyphenylenether sind an sich bekannt und können durch Selbstkondensation der entsprechenden einwertigen Phenole unter Einwirkung von molekularem Sauerstoff in Gegenwart von Katalysatoren hergestellt werden. Geeignete Verfahren werden beispielsweise beschrieben in der US-Patentschriften 3219625, 3306874, 3306875, 3956442, 3965069 und 3970851.

Die erfindungsgemäßen Formmassen enthalten 5 bis 15 Gew.%, insbesondere 5 bis 13 Gew.% mindestens eines Alkali- oder Erdalkaliphosphats oder eines hochsiedenden Phosphorsäureesters, Phosphorigsäureesters, Phosphinsäureesters, Phosphonigsäureesters oder organischen Phosphinoxids. Geeignete Phosphate sind beispielsweise

Natriumphosphat, Calciumphosphat, insbesondere jedoch Polyphosphate wie Natriumtripolyphosphat. Bevorzugte hochsiedende Phosphorsäureester, Phosphorigsäureester, Phosphinsäureester, Phosphorigsäurester oder organische Phosphinoxide haben einen Siedepunkt über 180°C. Bevorzugt sind Triarylphosphate, Triarylphosphite, Triarylphosphinoxide, Diaryl-mono- und diphosphonite, Diarylphosphinate sowie gemischt alky- und arylsubstituierte Phosphate und/oder Phosphite. Vorteilhaft verwendet man Phosphorsäureester von Alkanolen mit 5 bis 20 Kohlenstoffatomen wie Octanol, Nonanol- oder Decanol, Phenolen mit 6 bis 20 Kohlenstoffatomen wie Phenol oder Kresole, ferner Aralkanole mit 7 bis 20 Kohlenstoffatomen wie Benzylalkohol oder Phenylethylalkohol oder deren Gemische. Geeignete Phosphorsäure oder Phosphorigsäureester sind beispielsweise Triphenylphosphat, Trikresylphosphat, Trixylylphosphat, Trimesitylphosphat, Diphenylmesitylphosphat, Dimesitylphenylphosphat, Diphenyldodecylphosphat oder Trisnonylphenylphosphit, Tris(2,6-di-t-butyl)penylphospht sowie Diphenyldecxylphosphit. Geeignete organische Phosphinoxide enthalten als Liganden vorteilhaft 3 Alkylreste mit 5 bis 20 Kohlenstoffatomen, gegebenenfalls durch Alkylreste substituierte Phenylreste mit 6 bis 20 Kohlenstoffatomen oder Aralkylreste mit 7 bis 20 Kohlenstoffatomen. Besonders geeignet ist Triphenylphosphinoxid.

Geeignete Phosphinsäureester enthalten als Liganden gegebenenfalls mit Alkylresten substituierte Phenylreste mit 6 bis 20 Kohlenstoffatomen. Besonders geeignet ist Diphenylphosphinate. Als Phosphonigsäureester haben sich gegebenenfalls mit Alkylresten substituierte Phenylreste mit 6 bis 20 Kohlenstoffatomen bewährt. Besonders geeignet sind Tris(2,4-di-t-butyl-phenyl)-phosphonit oder Bis(2,4-di-t-butylphenyl)-biphenylenphosphonit.

Die genannten Alkali- und/oder Erdalkaliphosphate und hochsiedenden Phosphorsäure-, Phosphorigsäure-, Phosphonigsaure- oder Phosphinsäureester sowie Phosphinoxide können einzeln oder in Kombinationen miteinander angewandt werden.

Als Komponente D enthalten die erfindungsgemäßen Formmassen 5 bis 30 Gew.%, insbesondere 10 bis 20 Gew.% gerüstbildende Füllstoffe. Vorzugsweise verwendet man anorganische gerüstbildende Füllstoffe, um das Abtropfen zu verhindern und die Verkohlung zu unterstützen. Geeignete gerüstbildende Füllstoffe sind beispielsweise Talkum, Wollastonit, Kreide, Zinksulfid, Zinkoxid, Gipsfasern z.B. Franklin Fiber, synthetische Calciumsilikate, Kaolin, calciniertes Kaolin oder Magnesiumhydroxid. Bevorzugt sind calcinierter Kaolin, Wollastonit, Talkum und Zinksulfid.

Zusätzlich können die erfindungsgemäßen thermoplastischen Formmassen enthalten:

E 0 bis 30 Gew.%, insbesondere 5 bis 20 Gew.% Glasfasern

F 0 bis 20 Gew.%, insbesondere 5 bis 15 Gew.% mindestens eines kautschuk-elastischen Polymeren

G 0 bis 20 Gew.%, insbesondere 3 bis 10 Gew.% mindestens eines Styrolpolymerisats

Die Gewichtsprozente der Komponenten A bis G erganzen sich auf 100 Gew.%.

Die in der Formmasse vorliegenden Glasfasern haben im allgemeinen eine Länge von 0,1 bis 0,5 mm, vorzugsweise von 0,15 bis 0,30 mm und einen Durchmesser von etwa 6 bis 20 µm, vorzugsweise 10 bis 14 µm. Besonders bevorzugt sind Glasfasern aus E-Glas. Um eine bessere Haftung zu erzielen, sind die Glasfasern vorteilhaft mit Organosilanen wie Aminoalkylsilanen, inbsesondere Aminoalkyltrialkoxysilanen wie $\gamma$-Aminopropyltriethoxysilan beschichtet.

Geeignete kautschuk-elastische Polymerisate sind beispielsweise Blockcopolymere von Styrol und Butadien oder hydrierte Styrol-Butadien-Blockcopolymere, die jeweils zusätzlich Carboxylgruppen enthalten können. Geeignete Polymerisate werden beispielsweise beschrieben in GB-PS 985614 (verzweigte Blockcopolymere), US-PS 3113986, DE-A-1222260, DE-OS 2013263 (hydrierte Blockcopolymere) und DE-PS 2402715 (Dreiblockcopolymere). Andere geeignete kautschuk-elastische Polymerisate sind z.B. aufgebaut aus Ethylen, Acrylsäure-$C_2$-$C_4$-Alkylestern und (Meth)acrylsäure. Bevorzugte Polymerisate enthalten beispielsweise 5 bis 80 Gew.% Ethylen, 20 bis 50 Gew.% eines primären oder sekundären $C_2$- bis $C_4$-Alkylesters der (Meth)acrylsäure, vorzugsweise n-Butylacrylat und 0,5 bis 10 Gew.% eines säurefunktionellen oder latent säurefunktionellen Monomeren, z.B. Säuregruppen enthaltende Monomere wie Methacrylsäure oder Acrylsäure oder einem Monomeren mit verkappten Säuregruppen, das unter den Konfektionierbedingungen Säuregruppen bildet, wie t-Butyl(meth)acrylat.

Geeignet sind ferner Pfropfkautschuke. Derartige kautschukartige Polymerisate sind an sich bekannt. Sie werden hergestellt aus einer Pfropfgrundlage, die durch Emulsionspolymerisation von geeigneten Monomeren wie Butadien, Isopren, $C_2$- bis $C_4$-Alkylestern der Acrylsäure oder Methacrylsäure, gegebenenfalls unter Mitverwendung von bis zu 30 Gew.% an Monomeren, die bei der Homopolymerisation harte Polymerisate liefern, wie Styrolacrylnitril-Methylacrylat oder Methylmethacrylat, erhältlich ist. Vorteilhaft ist die Pfropfgrundlage vernetzt und hat insbesondere einen Gelgehalt von über 30 %. Um eine ausreichende Vernetzung zu bewirken, werden vorteilhaft 5 bis 10 Gew.%, bezogen auf die Monomeren an Vernetzungsmitteln, mit mehr als 2 Doppelbindungen, beispielsweise bifunktionelle Monomere, wie Butandiolacrylat oder Dicyclodecynilacrylat mitverwendet. Auf die Pfropfgrundlage werden dann Monomere aufgepfropft, insbesondere $C_2$- bis $C_4$-Alkylester der Acrylsäure, insbesondere n-Butylacrylat und vorteilhaft Monomere, die Carboxylgruppen enthalten, wie Acrylsäure oder Methacrylsäure, ferner latent säurefunktionelle Monomere wie tert.-Butylester der genannten Säuren.

Geeignete Styrolpolymerisate (Komponente G) sind alle bekannten aus alkenylaromatischen Monomeren aufgebauten Homo- und Copolymerisate. Bevorzugte Polymerisate leiten sich von Styrol sowie kern- oder seitenalkylsubstituierten Styrolen ab. Bevorzugte Monomere, von denen sich die Polymeren ableiten, sind Styrol, Methylstyrol und $\alpha$-Methylstyrol, insbesondere Styrol.

Als Comonomere werden gegebenenfalls polare Verbindungen wie Acrylnitril, Acrylsäure, (Meth)acrylsäureester von Alkanolen mit 1 bis 8 Kohlenstoffatomen und/oder Maleinsäure verwendet. Der Anteil an Comonomeren ist dabei so bemessen, daß die resultierenden Copolymeren mit dem jeweiligen Polyphenylenether homogen mischbar sind, was durch einfache Versuche leicht feststellbar ist. Es können auch unpolare Comonomere wie Butadien, Isopren oder Pentadien mitverwendet werden, die zusammen mit den oben genannten alkenylaromatischen Monomeren statistisch oder blockartig aufgebaute Copolymere ergeben.

Beispiele für geeignete Styrolpolymerisate sind Polystyrol, Poly-p-methylstyrol, Poly-$\alpha$-methylstyrol, Styrol/$\alpha$-methylstyrol-Copolymerisate,

Styrol/Acrylnitril-Copolymerisate, Copolymerisate aus Styrol/Methylacrylat, Styrol/Butylacrylat, Styrol/Methylmethacrylat, Styrol/Butadien, Styrol/Maleinsäureanhydrid, Styrol/Acrylnitril/Butadien, Copolymerisate von Ethylvinylbenzol und Divinylbenzol sowie Acrylharzmodifizierte Styrol/Butadien-Polymerisate. Geeignet sind auch Gemische von Homopolystyrol und den vorgenannten Copolymerisaten.

Geeignete Styrolpolymerisate sind auch mit kautschuk-elastischen Polymerisaten schlagzäh modifizierte Styrolpolymerisate. In der Regel enthalten solche schlagzähe Styrolpolymerisate 2 bis 20 Gew.% eines kautschuk-elastischen Polymerisats. Bevorzugte kautschuk-elastische Polymerisate haben eine Glastemperatur (Tg) von $\leq 0\,°C$, insbesondere $\leq -20\,°C$. Geeignete kautschuk-elastische Polymerisate sind neben Naturkautschuk Polybutadien, Polyisopren, Mischpolymerisate von Butadien und/oder Isopren mit Styrol-, Acrylsäure-, $C_1$- $C_4$-Alkylester oder Acrylnitril, ferner Polymerisate von Acrylsäure-, $C_2$- bis $C_4$-Alkylester, Polyisobutylen und kautschuk-elastische Copolymerisate, aufgebaut aus Ethylen, Propylen und Dienen.

Die erfindungsgemäßen Formmassen können als weitere Komponente F alle Zusatz- und/oder Hilfsstoffe in wirksamen Mengen enthalten, wie sie für thermoplastische Polymere üblich und gebräuchlich sind. Als solche Zusatz- und/oder Hilfsstoffe seien beispielsweise genannt Farbstoffe oder Pigmente, Antistatika, Antioxidantien, Flammschutzmittel und Schmiermittel.

Die erfindungsgemäßen thermoplastischen Formmassen stellt man vorteilhaft her, indem man die Polymerisate in schmelzflüssigem Zustand, z.B. bei einer Temperatur von 260 bis 330°C zusammen mit den übrigen Komponenten mischt. Geeignete Mischvorrichtungen sind beispielsweise Extruder oder Kneter.

Die erfindungsgemäßen Formmassen eignen sich zur Herstellung von Formteilen durch Spritzguß oder Extrusion.

Der Gegenstand der Erfindung sei an folgenden Beispielen veranschaulicht.

Beispiele 1 bis 5

Ein Polyamid (Komponente A), Polyphenylenether (Komponente B), Flammschutzmittel (Komponente C) und gerüstbildende Füllstoffe Komponente (D) werden in einen Zweiwellenextruder bei einer Temperatur von 200°C gemischt, gegebenenfalls unter Zusatz von Glasfasern (Komponente B) eines kautschuk-elastischen Polymerisats (Komponente F) und/oder eines Styrolpolymerisats (Komponente G). Die Zusammensetzung der einzelnen thermoplastischen Polyamid-Formmassen ist aus nachfolgender Tabelle 1 zu entnehmen, während die erzielten Eigenschaften der Formmassen aus Tabelle 2 hervorgehen.

Tabelle 1

## Tabelle 1

0 183 195

| Beispiele        Gew.% | 1 | 2 | 3 | 4 | 5 |
|---|---|---|---|---|---|
| Polyamid 6 ( )$_{rel}$ = 2,3 | – | 30 | – | 30 | 30 |
| Polyamid 66 | 30 | – | – | – | – |
| Polyamid 6I/6T (40/60) | – | – | 30 | – | – |
| PPE | 30 | 25 | 25 | 30 | 35 |
| Triphenylphosphat | – | 5 | 5 | 5 | 8 |
| Triphenylphosphinoxid | 5 | – | – | – | – |
| Na-tripolyphoshat | 2,5 | – | 3 | 3 | 5 |
| Trisnonylphenylphoshit | – | 2 | 2 | 2 | – |
| Calc. Kaolin sil. | 10 | 15 | – | – | – |
| Talkum | – | – | – | – | 15 |
| Sachtolith (ZnS) | – | – | 10 | 12 | 2 |
| Glasfasern | 15 | 10 | 15 | 15 | – |
| SBS 3 Blockcopolymere | – | – | 5 | – | 5 |
| n-Butylacrylat MAS Pfropfkautschuk | – | 10 | – | – | – |
| SBS COOH-modifiziert | 7,5 | – | – | – | – |
| HIPS enthaltend 8 Gew.% Polybutadien | – | 3 | – | 3 | – |
| SMSA mit 8 Gew.% MSA | – | – | 5 | – | – |
|  | 100 | 100 | 100 | 100 | 100 |

Tabelle 2

| Beispiel | Glührückstand % | MFI 250°C/2,16 kg | Vicat/B [°C] | Brennzeit (1/8") [sec] | $\sigma_R$ [N/mm$^2$] | $a_n$ [kJ/m$^2$] | $a_K$ [kJ/m$^2$] | $E_Z$ [N/mm$^2$] |
|---|---|---|---|---|---|---|---|---|
| 1 | 26,5 | 0,2 | 155 | 16 | 65 | 56 | 18 | 6100 |
| 2 | 26,0 | 1,6 | 170 | 20 | 68 | 48 | 14 | 5500 |
| 3 | 27,5 | 0,5 | 150 | 5,6 | 89 | 38 | 12 | 6500 |
| 4 | 29,5 | 2,2 | 172 | 10,5 | 93 | 35 | 8 | 7200 |
| 5 | 18,0 | 0,7 | 147 | 2,1 | 58 | 25 | 3,5 | 4200 |

$\sigma_R$ = Reißfestigkeit (DIN 53 455)

$a_n$ = Schlagzähigkeit (DIN 53 453)

$a_K$ = Kerbschlagzähigkeit

$E_Z$ = Elastizitätsmodul im Zugversuch (DIN 53 455)

MFI = melt flow Index

Vicat B = DIN 53 460

Meßmethode Brennzeit: UL-94 (Underwriters Laboratories)

**Ansprüche**

1.Selbstverlöschende thermoplastische Polyamid-Formmassen, enthaltend Polyamide, Polyphenylenether und Zusatzstoffe, gekennzeichnet durch einen Gehalt an

(A) 30 bis 50 Gew.% mindestens eines thermoplastischen Polyamids

(B) 20 bis 50 Gew.% mindestens eines thermoplastischen Polyphenylenethers

(C) 5 bis 15 Gew.% mindestens eines Alkali- oder Erdalkaliphosphats, eines hochsiedenden Phosphorsäureester, Phosphorigsäureester, Phosphinsäureesters, Phosphonigsäureester oder organischen Phosphinoxid

(D) 5 bis 30 Gew.% gerüstbildende Füllstoffe

(E) 0 bis 30 Gew.% Glasfasern

(F) 0 bis 20 Gew.% mindestens eines kautschukelastischen Polymere

(G) 0 bis 20 Gew.% mindestens eines Styrolpolymerisats, wobei sich die Gewichtsprozente der Komponenten A bis G auf 100 Gew.% ergänzen sowie

(H) gegebenenfalls Zusatzstoffe in wirksamen Mengen.

2. Formmassen nach Anspruch 1, dadurch gekennzeichnet, daß sie als Komponente A Polyamid-6, Polyamid-66 oder ein Polyamid, aufgebaut aus Hexamethylendiamin und Isophthalsäure sowie Terephthalsäure, enthalten.

3. Formmassen nach den Ansprüchen 1 und 2, dadurch gekennzeichnet, daß sie als Komponente B Poly(2,6-dimethyl-1,4-phenylen)ether enthalten.

4. Formmassen nach den Ansprüchen 1 bis 3, dadurch gekennzeichnet, daß sie als Komponente C Natriumtripolyphosphat, Triarylphosphate, Tri-arylphosphite, Triarylphosphinoxide, Triarylmono- und -diphosphonite, Diarylphosphinate, gemischt alkyl- und arylsubstituierte Phosphate und/oder -Phosphite enthalten.

5. Formmassen nach den Ansprüchen 1 bis 4, dadurch gekennzeichnet, daß sie als Komponente D calcinierten Kaolin, Wollastonit, Talkum und/oder Zinksulfid enthalten.

6. Thermoplastische Formmassen nach den Ansprüchen 1 bis 5, dadurch gekennzeichnet, daß sie als Komponente F einen mit Methacrylsäure gepfropften n-Butylacrylat-Pfropfkautschuk, bei dem Methacrylsäure in die äußere Pfropfhülle einpolymerisiert wurde, enthalten.

7. Formmassen nach den Ansprüchen 1 bis 5, dadurch gekennzeichnet, daß sie als Komponente F ein Carboxylgruppen enthaltendes elastomeres Blockcopolymerisat enthalten.

8. Formmassen nach den Ansprüchen 1 bis 7, dadurch gekennzeichnet, daß sie als Komponente G Polystyrol mit einem Gehalt von 2 bis 20 Gew.% eines kautschukelastischen Polymeren, mit einer Glastemperatur unter 0°C, enthalten.

9. Thermoplastische Formmasse nach den Ansprüchen 1 bis 7, dadurch gekennzeichnet, daß sie als Komponente G ein Styrol-Maleinsäureanhydrid-Copolymerisat enthalten.